# EUROPEAN PATENT SPECIFICATION

(11) **EP 1 956 516 B1**
(45) Date of publication and mention of the grant of the patent: **31.07.2013**
(21) Application number: 08101251.0
(22) Date of filing: 04.02.2008
(51) Int. Cl.: G06K 7/00

(54) **RFID tag reader and method for calibrating RFID tag reader**
RFID-Etikettenlesegerät und Verfahren zur Kalibrierung von RFID-Etikettenlesegeräten
Lecteur d'étiquette RFID et procédé d'étalonnage de lecteur d'étiquette RFID

(30) Priority: 06.02.2007 JP 2007026763
(43) Date of publication of application: 13.08.2008
(73) Proprietor: Sanden Corporation, Isesaki-shi, Gunma 372-8502 (JP)
(72) Inventor: Kuwako, Yuji, Isesaki-shi Gunma 372-8502 (JP); Tabata, Masaru, Isesaki-shi Gunma 372-8502 (JP); Satou, Masaaki, Isesaki-shi Gunma 372-8502 (JP); Shimamoto, Gaku, Isesaki-shi Gunma 372-8502 (JP); Matsumoto, Naoto, Isesaki-shi Gunma 372-8502 (JP)
(74) Representative: Haley, Stephen

(56) References cited:
- JP-A- 2004 355 212
- US-A1- 2005 285 718

## Description

### Background of the invention

### Field of the invention

The present invention relates to an RFID tag reader that reads, in a non-contact manner, a unique identifier set in an RFID tag attached to a distributed article in the field of physical distribution and the like from the RFID tag.

### Description of the related art

The RFID tag reader (hereinafter simply referred to as "reader" as well) of this type includes, as essential components, an antenna for communication with the RFID tag and a high-frequency circuit connected to the antenna. These components are mounted on the reader in various forms according to applications and the like of the reader. For example, when the reader is used to read RFID tags attached to commodities displayed on a shelf in a shop, a thin antenna unit having an area substantially the same as that of a shelf board is attached to a top surface or a bottom surface of the shelf board. The high-frequency circuit is stored in a housing attached to an appropriate place of the shelf. The high-frequency circuit and the antenna unit are connected by a coaxial cable having predetermined characteristic impedance. The antenna unit includes a thin magnetic body having a high magnetic permeability such as a ferrite sheet, a loop antenna wound around the magnetic body with the magnetic body as a core, and a matching circuit that realizes impedance matching. Such a reader sequentially reads RFID tags attached to a large number of commodities displayed on the shelf and transmits read data to an apparatus such as a computer.

In the reader of this type, when the impedance matching between the antenna and the high-frequency circuit is not proper, for example, a reading range is narrowed. In particular, when the reader reads the RFID tags of the commodities displayed on the shelf as described above, in some case, a resonance frequency and the impedance of the antenna fluctuate depending on a material of the shelf and materials, numbers, directions, and the like of the commodities displayed on the shelf and the impedance matching cannot be realized.

In order to solve such a problem, Japanese Patent Publication 2004-355212 discloses a technique for changing a constant of a matching circuit. In the technique disclosed in the laid-open patent application, as shown in FIGS. 1 to 4 of the document, on a transmission unit side of a high-frequency circuit, a standing wave ratio, transmission power, and the like are detected. A constant of a matching circuit provided in an antenna unit is controlled to be changed on the basis of detected values of the standing wave ratio, the transmission power, and the like. The technique disclosed in the laid-open patent application relates to a non-contact IC card. However, since a basic technique is the same as that for an RFID tag, the technique can also be applied to an RFID tag reader.

However, in the technique disclosed in the laid-open patent application, a control signal line for constant variable control for the matching circuit is provided separately from a high-frequency signal line that connects the transmission unit of the high-frequency circuit and the antenna unit. Therefore, for example, when the antenna and the high-frequency circuit are set in places far apart from each other as described above, work for setting the antenna and the high-frequency circuit is complicated.

It is an object of the present invention to provide an RFID tag reader that can realize satisfactory setting workability and satisfactory impedance matching.

In a first aspect, the invention consists in an RFID tag reader in accordance with claim 1.

In a second aspect, the invention consists in an RFID tag reader in accordance with claim 2.

According to the present invention, since the control signal for impedance adjustment is superimposed on the signal line through which the high-frequency signal is propagated, it is unnecessary to provide a signal line for control signal transmission. In other words, it is unnecessary to increase wring between the high-frequency circuit side and the antenna side. Consequently, it is possible to realize both satisfactory setting workability and an impedance adjusting function.

As a method for superimposing the control signal on the high-frequency signal, i.e., a method for multiplexing the signal line for transmitting the high-frequency signal, it is possible to use various methods.

In a third aspect, the invention consists in a method in accordance with claim 6.

A constant of the matching circuit is controlled to be adjusted by using a voltage value of the separated DC component, i.e., a bias voltage value as the control signal.

In a fourth aspect, the invention consists in a method in accordance with claim 7.

This is a method of a kind of a time-division multiplex system. The control signal is transmitted as a digital signal in a time frame in which the high-frequency signal is stopped. Since the high-frequency signal and the control signal usually have different frequency bands, it is possible to separate the high-frequency signal and the control signal in the filter circuit on the antenna side. A constant of the matching circuit is controlled to be adjusted on the basis of the separated control signal. Since the transmission of the control signal is intermittent in this method, the holding means for holding the control signal is provided on the antenna side and the constant of the matching circuit is controlled to be adjusted on the basis of the held control signal. In this method, a power supply may be necessary in, for example, the holding means for holding the control signal on the antenna side. Therefore, this application proposes a method characterized in that the superimposing means applies a DC bias to the superimposed signal and the separating means separates a bias current from the superimposed signal and supplies the bias current to the holding means as a power supply.

As a method for impedance adjustment, it is possible to use various methods. As an example of the method, this application proposes a method characterized by including detecting means for detecting a standing wave ratio in the signal line and control means for outputting the control signal on the basis of the standing wave ratio detected by the detecting means. As another example of the method, this application proposes a method characterized by including detecting means for detecting a predetermined RFID tag for calibration and control means for outputting the control signal on the basis of a state of detection of the RFID tag for calibration by the detecting means.

Other objects, configurations, and effects of the present invention except those described above will be made apparent by the following detailed explanation.

### Brief description of several views of the drawings

FIG. 1 is a diagram of an RFID tag reader;
FIG. 2 is a functional block diagram of a control unit according to a first embodiment of the present invention;
FIG. 3 is a functional block diagram of an antenna unit according to the first embodiment;
FIG. 4 is a diagram for explaining an output signal of an amplifier;
FIG. 5 is a diagram for explaining a control signal;
FIG. 6 is a diagram for explaining a transmission signal;
FIG. 7 is a functional block diagram of a control unit according to a second embodiment of the present invention;
FIG. 8 is a functional block diagram of an antenna unit according to the second embodiment;
FIG. 9 is a functional block diagram of an impedance adjusting circuit according to the second embodiment;
FIG. 10 is a diagram for explaining an output signal of an amplifier;
FIG. 11 is a diagram for explaining a DC-biased output;
FIG. 12 is a diagram for explaining a digital version of a control signal;
FIG. 13 is a diagram for explaining a transmission signal; and
FIG. 14 is a functional block diagram of a control unit according to a third embodiment of the present invention.

### Detailed description of the invention

### (First Embodiment)

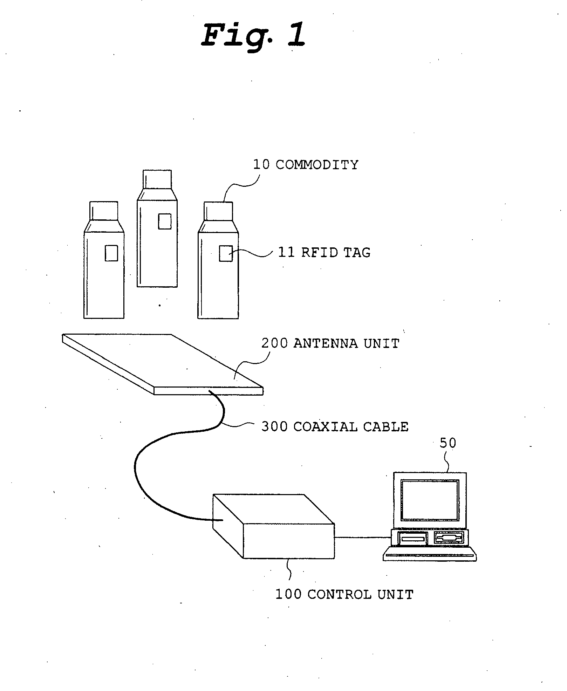

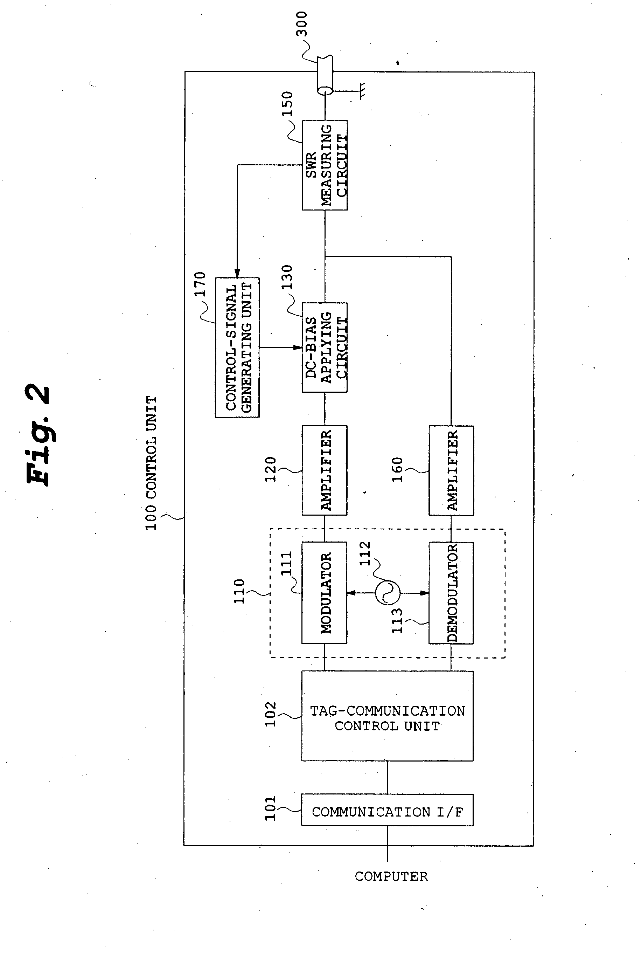

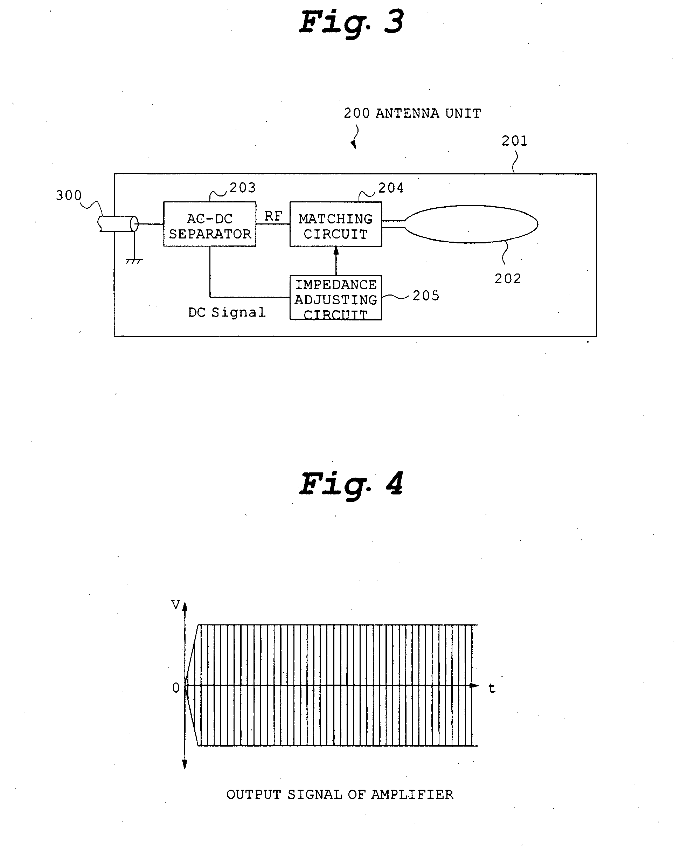

An RFID tag reader according to an embodiment of the present invention is explained below with reference to the drawings. FIG. 1 is an overall diagram of the RFID tag reader, FIG. 2 is a functional block diagram of a control unit, and FIG. 3 is a functional block diagram of an antenna unit.

The RFID tag reader according to this embodiment is used in an application for reading unique numbers, which are unique identifiers of RFID tags 11 attached to commodities 10 displayed in a show case, from the RFID tags 11. In general, a display shelf of the showcase is made of metal that substantially affects formation of an electromagnetic field. Therefore, impedance matching adjustment for an antenna is indispensable in additionally setting the reader in the showcase. Commodities of various materials are displayed on the display shelf and the number of commodities displayed on the display shelf is constantly changed. Therefore, impedance matching adjustment is also indispensable in operation. The reader according to the present invention automatically performs such impedance matching adjustment.

The RFID tag reader includes, as shown in FIG. 1, a control unit 100, an antenna unit 200, and a coaxial cable 300 for high-frequency signal transmission that connects both the units 100 and 200. The antenna unit 200 is attached to an upper surface or a lower surface of the display shelf of the showcase. The control unit 100 is set in an appropriate place such as a machine chamber in a lower part of the showcase. The control unit 100 is connected to a computer 50 or the like that performs inventory management for the showcase and transmits a list of detected unique numbers of the RFID tags 11 to the computer 50.

The control unit 100 includes, as shown in FIG. 2, a communication interface 101 for connection to a host apparatus 50, a tag-communication control unit 102 that controls communication with the RFID tags 11, a modulator 111 that modulates an output signal of the tag-communication control unit 102 into a high-frequency signal, an oscillator 112 that generates a carrier wave, an amplifier 120 that amplifies the high-frequency signal, a DC-bias applying circuit 130 that applies a DC bias to the high-frequency signal, and a standing-wave-ratio measuring circuit 150 that measures a voltage standing wave ratio (VSWR). The standing-wave-ratio measuring circuit 150 is connected to the antenna unit 200 through a connector (not shown) and the coaxial cable 300. The control unit 100 further includes an amplifier 160 that amplifies a high-frequency signal received from the antenna unit 200 and a demodulator 113 that demodulates a communication signal from the high-frequency signal. The control unit 100 further includes a control-signal generating unit 170 that generates a control signal for impedance matching adjustment on the basis of a measurement result of the standing-wave-ratio measuring circuit 150. The modulator 111, the demodulator 113, and the oscillator 112 are mounted on a dedicated communication IC 110.

The antenna unit 200 includes an antenna coil 202 wound around an inner peripheral edge of a housing 201 having a thin box shape. The antenna unit 200 includes an AC-DC separator 203 connected to the coaxial cable 300 through a connector (not shown). The AD-DC separator 203 separates a signal received from the control unit 100 into a DC component and an AC component. A voltage of the separated DC component is a bias value applied by the DC-bias applying circuit 130 of the control unit 100. The separated AC component is a high-frequency signal outputted from the amplifier 120 on a transmission side. The antenna unit 200 further includes an impedance matching circuit 204 and an impedance adjusting circuit 205 that controls a constant of the impedance matching circuit 204.

Operations of the reader will now be explained. First, a basic operation of the reader is explained. The tag-communication control unit 102 outputs a communication message according to a protocol for communication with the RFID tag 11. An output signal of the tag-communication control unit 102 is modulated into a carrier wave, which is supplied from the oscillator 112, by the modulator 111. A high-frequency signal outputted from the modulator 111 is amplified by the amplifier 120 and applied with a DC bias by the DC-bias applying circuit 130 when necessary. The high-frequency signal outputted from the DC-bias applying circuit 130 is transmitted to the antenna unit 200 through the standing-wave-ratio measuring circuit 150 and the coaxial cable 300.

The high-frequency signal transmitted to the antenna unit 200 is separated into a DC signal and an AC signal by the AC-DC separator 203. The DC signal is equivalent to the DC bias applied by the DC-bias applying circuit 130. On the other hand, the AC signal is equivalent to the high-frequency signal outputted from the modulator 111. The high-frequency signal is radiated from the antenna coil 202 through the impedance matching circuit 204. The RFID tag 11 operates using the received high-frequency signal as a power supply and transmits a response signal. The response signal received by the antenna coil 202 is inputted to the amplifier 160 on a reception side through the impedance matching circuit 204, the AC-DC separator 203, the coaxial cable 300, and the standing-wave-ratio measuring circuit 150. The high-frequency signal amplified by the amplifier 160 is demodulated by the demodulator 113. The demodulated signal is inputted to the tag-communication control unit 102.

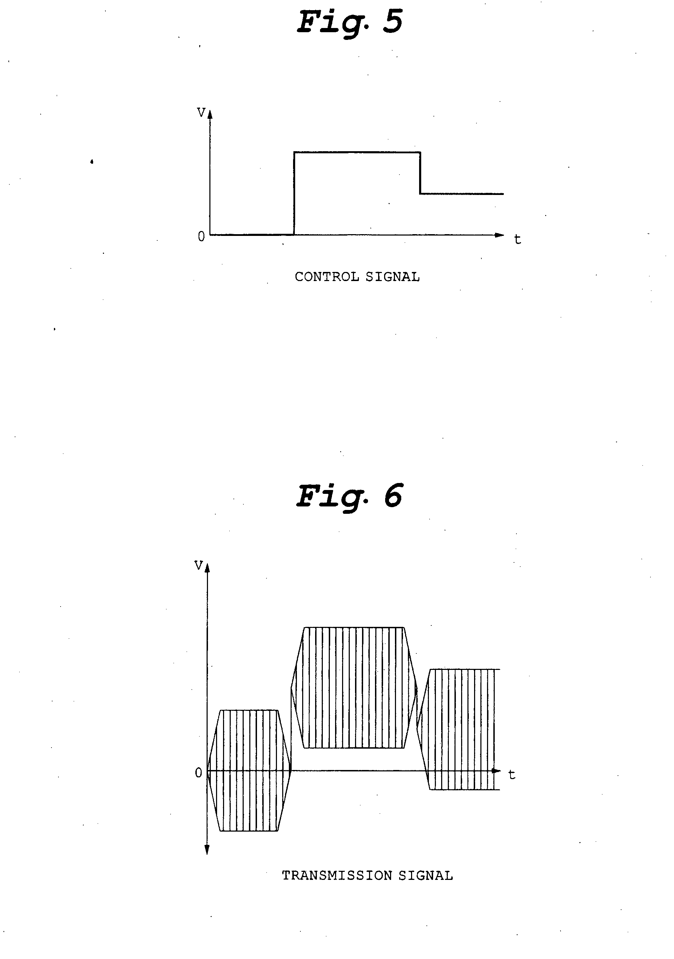

An operation of impedance matching adjustment will now be explained. In the reader, a control signal for impedance adjustment transmitted from the control unit 100 to the antenna unit 200 is transmitted together with a high-frequency signal through the coaxial cable. The control signal includes a DC signal and associates a control value with a voltage value. The control-signal generating unit 170 generates a control signal by performing feedback control to minimize a standing wave ratio measured by the standing-wave-ratio measuring circuit 150. The DC-bias applying circuit 130 applies, as a DC bias, the control signal generated by the control-signal generating unit 170 to a high-frequency signal outputted from the amplifier 120. FIG. 4 shows a high-frequency signal outputted from the amplifier 120. FIG. 5 shows a control signal outputted from the control-signal generating unit 170. FIG. 6 shows a superimposed signal outputted from the DC-bias applying circuit 130.

The superimposed signal applied with the control signal as the DC bias is separated into the control signal and the high-frequency signal by the AC-DC separator 203 of the antenna unit 200. The impedance adjusting circuit 205 adjusts a constant of the impedance adjusting circuit 205 on the basis of the voltage value of the control signal, i.e., a DC bias value of a transmission signal on the coaxial cable 300. As an example of a specific circuit configuration, one or plural series circuits including a predetermined impedance element and a switch element such as a transistor or a relay switch are provided in the impedance matching circuit 204. The impedance adjusting circuit 205 switches a constant of the impedance matching circuit 204 by switching ON and OFF of the switch element on the basis of the voltage value of the control signal.

With such a reader, it is possible to transmit the high-frequency signal for communication with the RFID tags 11 and the signal for impedance matching adjustment through one coaxial cable 300. Therefore, it is possible to realize both the setting workability and the impedance matching adjusting function.

### (Second Embodiment)

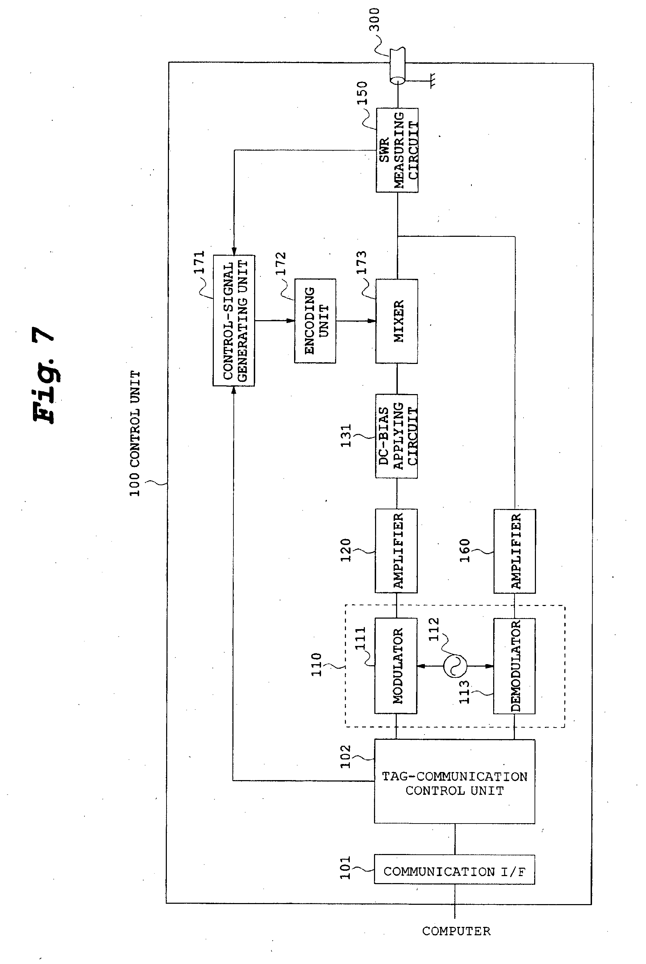

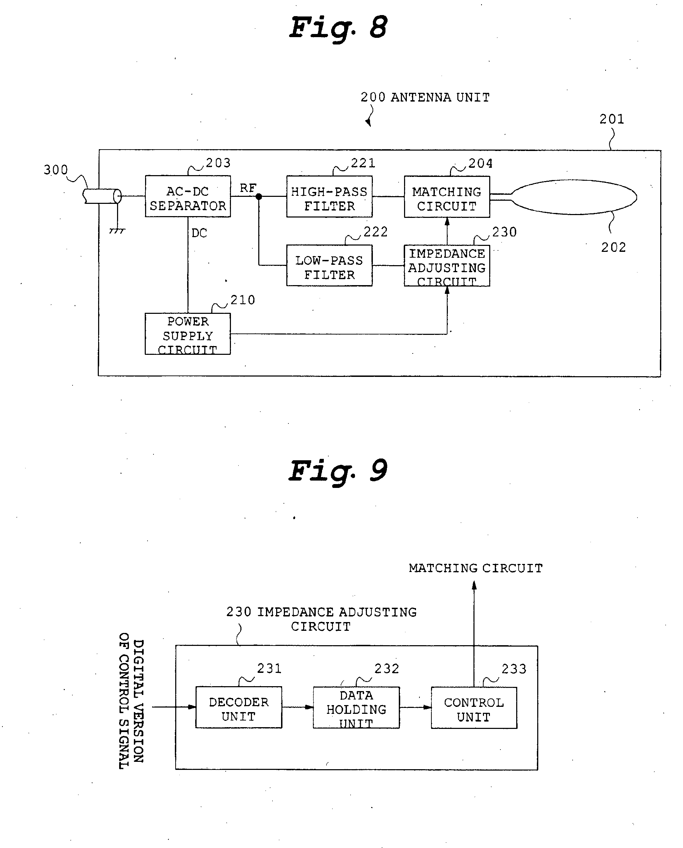

An RFID tag reader according to a second embodiment of the present invention is explained below with reference to the drawings. FIG. 7 is a functional block diagram of a control unit, FIG. 8 is a functional block diagram of an antenna unit, and FIG. 9 is a functional block diagram of an impedance adjusting circuit.

The reader according to this embodiment is different from the reader according to the first embodiment in regard to superimposing system for a control signal. Specifically, a high-frequency signal is temporarily stopped and a digital version of a control signal is inserted in the stop time, whereby both the high-frequency signal and the control system are transmitted through one coaxial cable 300. The difference is described in detail below.

The control unit 100 includes, as shown in FIG. 7, a DC-bias applying circuit 131 that applies a DC bias to a high-frequency signal from the amplifier 120, a control-signal generating unit 171 that generates a control signal for impedance matching adjustment on the basis of a measurement result of the standing-wave-ratio measuring circuit 150, an encoding unit 172 that encodes the control signal generated by the control-signal generating unit 171 into a digital signal, and a mixer 173 that mixes an output of the encoding unit 172 and an output of the amplifier 120.

Unlike the first embodiment, a bias voltage in the DC-bias applying circuit 131 is a constant voltage. The bias voltage is used as a power supply for various circuits in the antenna unit 200. As in the first embodiment, the control unit 100 generates a control signal by performing feedback control to minimize a standing wave ratio measured by the standing-wave-ratio measuring circuit 150. The control-signal generating unit 171 transmits a control signal only when the control-signal generating unit 171 receives a transmission permission signal from the tag-communication control unit 102.

The antenna unit 200 includes, as shown in FIG. 8, a power supply circuit 210 that stabilizes a DC signal separated by the AC-DC separator 203, a high-pass filter 221 that causes a high-frequency band of an AC signal separated by the AC-DC separator 203 to pass, a low-pass filter 222 that causes a low-frequency band of the AC signal to pass, and an impedance adjusting circuit 230 that controls a constant of the impedance matching circuit 204. The high-pass filter 221 causes at least a high-frequency signal from the amplifier 120 to pass through. The low-pass filter 222 causes at least an output signal of the encoding unit 172 to pass through. In other words, the high-pass filter 221 and the low-pass filter 222 function as a separator that separates a high-frequency signal for communication with the RFID tag 11 and a control signal.

The impedance adjusting circuit 230 includes, as shown in FIG. 9, a decoding unit 231 that decodes the signal that has passed through the low-pass filter 222 and extracts the control signal, a data holding unit 232 that holds a value of the control signal from the decoding unit 231, and a control unit 233 that controls the constant of the impedance matching circuit 204 on the basis of the control value held by the data holding unit 232. The impedance adjusting circuit 230 operates with the DC signal separated by the AC-DC separating circuit 203, i.e., a bias current applied by the DC-bias applying circuit 131 as a power supply.

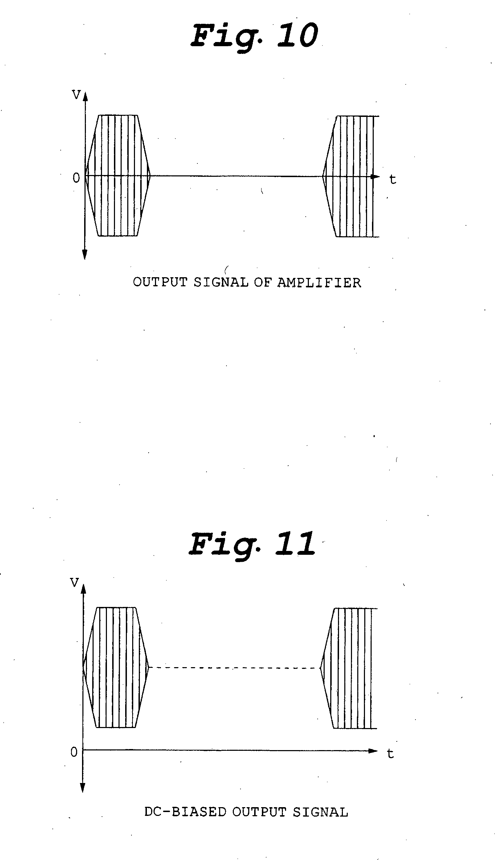

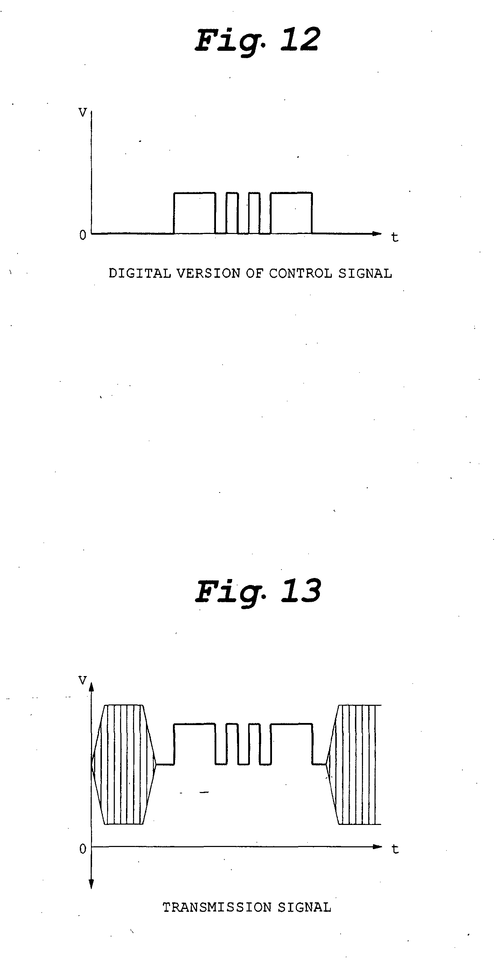

An operation of impedance matching adjustment in the reader according to this embodiment will now be explained. The tag-communication control unit 102 stops an output of a transmission signal at predetermined time intervals. The tag-communication control unit 102 transmits a transmission permission signal to the control-signal generating unit 171 within a stop time of the transmission signal. The DC-bias applying circuit 131 applies a predetermined bias voltage to an amplified high-frequency signal. On the other hand, the control-signal generating unit 171 generates a control signal by performing feedback control to minimize a standing wave ratio measured by the standing-wave-ratio measuring circuit 150. The control-signal generating unit 171 outputs the control signal only when the control-signal generating unit 171 receives the transmission permission signal from the tag-communication control unit 102. The control signal is encoded by the encoding unit 172 into a digital version and mixed with an output signal of the DC-bias applying circuit 131 by the mixer 173. FIG. 10 shows a high-frequency signal outputted from the amplifier 120. FIG. 11 shows a high-frequency signal outputted from the DC-bias applying circuit 131. FIG. 12 shows an output signal from the encoding unit 172. FIG. 13 shows a superimposed signal outputted from the mixer 173.

The superimposed signal transmitted through the coaxial cable 300 is separated into a DC signal and a high-frequency signal by the AC-DC separator 203 of the antenna unit 200. A voltage of the separated DC signal is stabilized by the power supply circuit 210. The DC signal with the voltage stabilized is supplied to the impedance adjusting circuit 230 as a power supply. In the separated high-frequency signal, the output signal from the amplifier 120 is supplied to the antenna coil 202 through the high-pass filter 221 and the impedance matching circuit 204. A digital signal component of the separated high-frequency signal is inputted to the impedance adjusting circuit 230 through the low-pass filter 222. The digital signal that has passed through the low-pass filter 222 is decoded by the decoding unit 231 of the impedance adjusting circuit 230 and the control signal is extracted from the digital signal. The decoded control signal is held by the data holding unit 232. The control unit 233 controls a constant of the impedance matching circuit 204 on the basis of the control signal held by the data holding unit 232. A method for impedance matching adjustment by the control unit 233 is the same as that in the first embodiment.

With such a reader, as in the first embodiment, it is possible to transmit the high-frequency signal for communication with the RFID tags 11 and the signal for impedance matching adjustment through one coaxial cable 300. Therefore, it is possible to realize both the setting workability and the impedance matching adjusting function.

### (Third Embodiment)

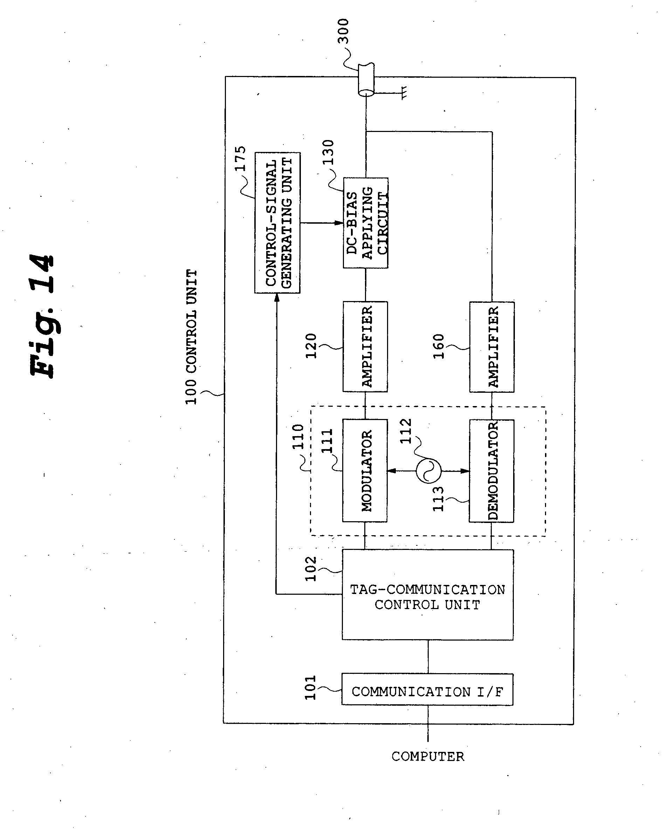

An RFID tag reader according to a third embodiment of the present invention is explained below with reference to drawings. FIG. 14 is a functional block diagram of a control unit.

The reader according to this embodiment is different from the reader according to the first embodiment in a method for generating a control signal in a control-signal generating unit. In other words, this embodiment and the first embodiment are different in that, whereas feedback control is performed to minimize a standing wave ratio in the first embodiment, in this embodiment, a control signal is generated on the basis of a state of detection of a predetermined RFID tag for calibration. A method for superimposing a control signal is the same as that in the first embodiment. The difference is explained below.

The RFID tag for calibration is fixed near an outer edge of a reading range. In this embodiment, one RFID tag for calibration is attached in an upper part behind a display shelf of a showcase. A specification of the RFID tag for calibration is the same as that of the normal RFID tags 11 attached to the commodities 10.

The tag-communication control unit 102 of the control unit 100 designates a unique number of the RFID tag for calibration at predetermined time intervals and attempts to read the RFID tag for calibration. When the RFID tag for calibration cannot be read, the tag-communication control unit 102 instructs a control-signal generating unit 175 to change a control signal for impedance matching adjustment until the reading is successfully performed. The control-signal generating unit 175 changes the control signal for impedance matching adjustment on the basis of the instruction from the tag-communication control unit 102 and outputs the control signal for impedance matching adjustment. This control signal is the same as that in the first embodiment. When the reading of the RFID tag for calibration is successfully performed, the tag-communication control unit 102 instructs the control-signal generating unit 175 to maintain the control signal.

With such a reader, since impedance adjustment is performed on the basis of a state of detection of the RFID tag for calibration, certainty of reading is improved. Other actions and effects are the same as those in the first embodiment. This embodiment is explained as a modification of the first embodiment. However, the second embodiment can be modified in the same manner.

The embodiments of the present invention have been described in detail. However, the present invention is not limited to the embodiments. For example, in the embodiments described above, the reader is set in the showcase. However, the present invention may be used for any application.

In the embodiments, as the examples of the method for superimposing a control signal, the method for superimposing the control signal as a DC bias and the method for superimposing a digital version of the control signal in a stop period of a high-frequency circuit are described. However, other superimposing methods may be adopted. For example, various methods such as amplitude modulation and frequency modulation are conceivable. From the viewpoint of simplification of a circuit configuration, the method for using a DC bias described in detail in the first embodiment is more advantageous than a superimposing method employing a complicated modulation method.

## Claims

1. An RFID tag reader comprising:
an antenna unit (200) comprising an antenna (202) for communication with an RFID tag (11);
a control unit (100) comprising a high-frequency circuit (110, 120) adapted to process a high-frequency signal for communication with the RFID tag (11); and
a signal line (300) that connects the antenna (202) and the high-frequency circuit (110, 120);
superimposing means (130) located in the control unit (100) adapted for superimposing a control signal for impedance adjustment on the high-frequency signal outputted from the high-frequency circuit (110, 120) to the antenna (202) to output a superimposed signal;
separating means (203) located in the antenna unit (200) adapted for separating the superimposed signal inputted from the superimposing means (130) through the signal line (300) into the high-frequency signal and the control signal;
a matching circuit (204) adapted to subject the high-frequency signal separated by the separating means (203) to impedance matching and adapted to input the high-frequency signal to the antenna (202); and
adjusting means (205) adapted for controlling a circuit constant of the matching circuit (204) on the basis of the control signal separated by the separating means (203 ), wherein
the superimposing means (130) is adapted to superimpose a DC signal of a voltage value corresponding to the control signal on the high-frequency signal, and
the separating means (203) is adapted to separate the high-frequency signal and the control signal using a filter circuit.

2. An RFID tag reader comprising:
an antenna unit (200) comprising an antenna (202) for communication with an RFID tag (11);
a control unit (100) comprising a high-frequency circuit (110, 120) adapted to process a high-frequency signal for communication with the RFID tag (11); and
a signal line (300) that connects the antenna (202) and the high-frequency circuit (110, 120);
superimposing means (173) located in the control unit (100) adapted for superimposing a control signal for impedance adjustment on the high-frequency signal outputted from the high-frequency circuit (110, 120) to the antenna (202) to output a superimposed signal;
separating means (203, 221, 222) located in the antenna unit (200) adapted for separating the superimposed signal inputted from the superimposing means (173) through the signal line (300) into the high-frequency signal and the control signal;
a matching circuit (204) adapted to subject the high-frequency signal separated by the separating means (203, 221, 222) to impedance matching and adapted to input the high-frequency signal to the antenna (202); and
adjusting means ( 230) adapted for controlling a circuit constant of the matching circuit (204) on the basis of the control signal separated by the separating means (203, 221, 222), wherein
the superimposing means (173) adapted to stop the output of the high-frequency signal for a predetermined time and adapted to output a digital version of the control signal within the stop time,
the separating means (203, 221, 222) adapted to separate the high-frequency signal and the control signal using a filter circuit, and
the adjusting means (230) includes holding means (232) adapted for holding the control signal separated by the separating means (230, 221, 222) and controls the circuit constant of the matching circuit (204) on the basis of the control signal held by the holding means (232).

3. The RFID tag reader according to claim 2, wherein
the superimposing means (131) is adapted to apply a DC bias to the superimposed signal, and
the separating means (203) is adapted to separate a bias current from the superimposed signal and is adapted to supply the bias current to the holding means (232) as a power supply.

4. The RFID tag reader according to any one of claims 1 to 3, further comprising:
detecting means (150) for detecting a standing wave ratio in the signal line (300); and
control means (170) adapted for outputting the control signal on the basis of the standing wave ratio detected by the detecting means (150).

5. The RFID tag reader according to any one of claims 1 to 3, further comprising:
detecting means (150) adapted for detecting a predetermined RFID tag for calibration; and
control means (102) adapted for outputting the control signal on the basis of a state of detection of the RFID tag for calibration by the detecting means (150).

6. A method for calibrating an RFID tag reader including an antenna (202) for communication with an RFID tag (11), a high-frequency circuit (110, 120) that processes a high-frequency signal for communication with the RFID tag (11), a signal line (300) that connects the antenna (202) and the high-frequency circuit (110, 120), and an impedance matching circuit (204) that subjects the antenna (202) and the signal line (300) to impedance matching, the method comprising:
superimposing a control signal for impedance adjustment on a high-frequency signal outputted from the high-frequency circuit (110, 120) to the antenna (202) and transmitting a superimposed signal to the signal line (300);
separating the superimposed signal transmitted on the signal line (300) into the high-frequency signal and the control signal; and
controlling a circuit constant of the impedance matching circuit (204) on the basis of the separated control signal, wherein
the superimposing superimposes a DC signal of a voltage value corresponding to the control signal on the high-frequency signal, and
the separating separates the high-frequency signal and the control signal using a filter circuit.

7. A method for calibrating an RFID tag reader including an antenna (202) for communication with an RFID tag (11), a high-frequency circuit (110, 120) that processes a high-frequency signal for communication with the RFID tag (11), a signal line (300) that connects the antenna (202) and the high-frequency circuit (110, 120), and an impedance matching circuit (204) that subjects the antenna (202) and the signal line (300) to impedance matching, the method comprising:
superimposing a control signal for impedance adjustment on a high-frequency signal outputted from the high-frequency circuit (110, 120) to the antenna (202) and transmitting a superimposed signal to the signal line (300);
separating the superimposed signal transmitted on the signal line (300) into the high-frequency signal and the control signal; and
controlling a circuit constant of the impedance matching circuit (204) on the basis of the separated control signal, wherein
the superimposing stops the output of the high-frequency signal for a predetermined time and outputs a digital version of the control signal within the stop time,
the separating separates the high-frequency signal and the control signal using a filter circuit, and
the controlling includes holding the separated control signal and controlling the circuit constant of the matching circuit (204) on the basis of the held control signal.

## Patentansprüche

1. RFID-Etikettenlesegerät, umfassend:
eine Antenneneinheit (200), die eine Antenne (202) zur Kommunikation mit einer RFID-Etikette (11) umfasst;
eine Steuerungseinheit (100), die einen Hochfrequenzschaltkreis (110, 120) umfasst, der geeignet ist, ein Hochfrequenzsignal für Kommunikation mit der RFID-Etikette (11) zu verarbeiten; und
eine Signalleitung (300), welche die Antenne (202) und den Hochfrequenzschaltkreis (110, 120) verbindet;
Überlagerungsmittel (130), das sich in der Steuerungseinheit (100) befindet, das zur Überlagerung eines Steuerungssignals für Impedanzeinstellung auf das Hochfrequenzsignal geeignet ist, das vom Hochfrequenzschaltkreis (110, 120) an die Antenne (202) ausgegeben wird, um ein überlagertes Signal auszugeben;
Trennungsmittel (203), das sich in der Antenneneinheit (200) befindet, das zur Trennung des überlagerten Signals geeignet ist, das vom Überlagerungsmittel (130) durch die Signalleitung (300) in das Hochfrequenzsignal und das Steuerungssignal eingegeben wurde;
ein Anpassungsschaltkreis (204), der geeignet ist, das vom Trennungsmittel (203) getrennte Hochfrequenzsignal der Impedanzanpassung zu unterwerfen und geeignet ist, das Hochfrequenzsignal in die Antenne (202) einzugeben; und
Einstellmittel (205), das zur Steuerung einer Schaltkreiskonstanten des Anpassungsschaltkreises (204) auf der Basis des vom Trennungsmittel (203) getrennten Steuerungssignals geeignet ist, wobei
das Überlagerungsmittel (130) zum Überlagern eines DC-Signals eines Spannungswertes geeignet ist, der dem Steuerungssignal auf dem Hochfrequenzsignal entspricht, und
das Trennungsmittel (203) geeignet ist, das Hochfrequenzsignal und das Steuerungssignal unter Verwendung eines Filterschaltkreises zu trennen.

2. RFID-Etikettenlesegerät, umfassend:
eine Antenneneinheit (200), die eine Antenne (202) zur Kommunikation mit einer RFID-Etikette (11) umfasst;
eine Steuerungseinheit (100), die einen Hochfrequenzschaltkreis (110, 120) umfasst, der geeignet ist, ein Hochfrequenzsignal für Kommunikation mit der RFID-Etikette (11) zu verarbeiten; und
eine Signalleitung (300), welche die Antenne (202) und den Hochfrequenzschaltkreis (110, 120) verbindet;
Überlagerungsmittel (173), das sich in der Steuerungseinheit (100) befindet, das zur Überlagerung eines Steuerungssignals für Impedanzeinstellung auf das Hochfrequenzsignal geeignet ist, das vom Hochfrequenzschaltkreis (110, 120) an die Antenne (202) ausgegeben wird, um ein überlagertes Signal auszugeben;
Trennungsmittel (203, 221, 222), die sich in der Antenneneinheit (200) befinden, die zur Trennung des überlagerten Signals geeignet ist, das vom Überlagerungsmittel (173) durch die Signalleitung (300) in das Hochfrequenzsignal und das Steuerungssignal eingegeben wurde;
ein Anpassungsschaltkreis (204), der geeignet ist, das von den Trennungsmitteln (203, 221, 222) getrennte Hochfrequenzsignal der Impedanzanpassung zu unterwerfen und geeignet ist, das Hochfrequenzsignal in die Antenne (202) einzugeben; und
Einstellmittel (230), das zur Steuerung einer Schaltkreiskonstante des Anpassungsschaltkreises (204) auf der Basis des von den Trennungsmitteln (203, 221, 222) getrennten Steuerungssignals geeignet ist, wobei
das Überlagerungsmittel (173), das geeignet ist, die Ausgabe des Hochfrequenzsignals für eine vorgegebene Zeit zu stoppen und geeignet ist, eine digitale Version des Steuerungssignals innerhalb der Stoppzeit auszugeben,
die Trennungsmittel (203, 221, 222) geeignet sind, das Hochfrequenzsignal und das Steuerungssignal unter Verwendung eines Filterschaltkreises zu trennen; und
das Einstellmittel (230) das Haltemittel (232) einschließt, welches geeignet ist, das durch die Trennmittel (203, 221, 22) getrennte Steuerungssignal zu halten und welches die Schaltkreiskonstante des Anpassungsschaltkreises (204) auf der Basis des vom Haltemittel (232) gehaltenen Steuerungssignals steuert.

3. RFID-Etikettenlesegerät nach Anspruch 2, wobei
das Überlagerungsmittel (131) geeignet ist, eine DC-Vorspannung auf das überlagerte Signal anzuwenden,
und
das Trennungsmittel (203) geeignet ist, einen Vorspannungsstrom vom überlagerten Signal zu trennen und geeignet ist, den Vorspannungsstrom als eine Stromversorgung an das Haltemittel (232) zu liefern.

4. RFID-Etikettenlesegerät nach einen beliebigen der Ansprüche 1 bis 3, das weiter umfasst: Detektionsmittel (150) zum Detektieren eines Stehwellenverhältnisses in der Signalleitung (300); und
Steuerungsmittel (170), das geeignet ist, das Steuerungssignal auf der Basis des vom Detektionsmittel (150) detektierten Stehwellenverhältnisses auszugeben.

5. RFID-Etikettenlesegerät nach einem beliebigen der Ansprüche 1 bis 3, weiter umfassend:
Detektionsmittel (150), das geeignet ist, eine vorgegebene RFID-Etikette zur Kalibrierung zu detektieren; und
wobei das Steuerungsmittel (102) geeignet ist, das Steuerungssignal auf der Basis eines Detektionszustands der RFID-Etikette zur Kalibrierung durch das Detektionsmittel (150) auszugeben.

6. Verfahren zur Kalibrierung eines RFID-Etikettenlesegeräts, das eine Antenne (202) zur Kommunikation mit einer RFID-Etikette (11), einen Hochfrequenzschaltkreis (110, 120), der ein Hochfrequenzsignal zur Kommunikation mit der RFID-Etikette (11) verarbeitet, eine Signalleitung (300), welche die Antenne (202) und den Hochfrequenzschaltkreis (110, 120) verbindet und einen Impedanzanpassungsschaltkreis (204), der die Antenne (202) und die Signalleitung (300) der Impedanzanpassung unterwirft, einschließt, wobei das Verfahren umfasst:
Überlagern eines Steuerungssignals zur Impedanzeinstellung auf ein Hochfrequenzsignal, das vom Hochfrequenzschaltkreis (110, 120) an die Antenne (202) ausgegeben wurde und Senden eines überlagerten Signals zur Signalleitung (300);
Trennen des auf der Signalleitung (300) gesendeten überlagerten Signals in das Hochfrequenzsignal und das Steuerungssignal; und
Steuern einer Schaltkreiskonstanten des Impedanzanpassungsschaltkreises (204) auf der Basis des getrennten Steuerungssignals, wobei
die Überlagerung ein DC-Signal eines Spannungswertes, der dem Steuerungssignal entspricht, auf das Hochfrequenzsignal überlagert, und
das Trennen das Hochfrequenzsignal und das Steuerungssignal unter Verwendung eines Filterschaltkreises trennt.

7. Verfahren zur Kalibrierung eines RFID-Etikettenlesegeräts, das eine Antenne (202) zur Kommunikation mit einer RFID-Etikette (11), einen Hochfrequenzschaltkreis (110, 120), der ein Hochfrequenzsignal zur Kommunikation mit der RFID-Etikette (11) verarbeitet, eine Signalleitung (300), welche die Antenne (202) und den Hochfrequenzschaltkreis (110, 120) verbindet und einen Impedanzanpassungsschaltkreis (204), der die Antenne (202) und die Signalleitung (300) der Impedanzanpassung unterwirft, einschließt, wobei das Verfahren umfasst:
Überlagern eines Steuerungssignals zur Impedanzeinstellung auf ein Hochfrequenzsignal, das vom Hochfrequenzschaltkreis (110, 120) an die Antenne (202) ausgegeben wurde und Senden eines überlagerten Signals zur Signalleitung (300);
Trennen des auf der Signalleitung (300) gesendeten überlagerten Signals in das Hochfrequenzsignal und das Steuerungssignal; und
Steuern einer Schaltkreiskonstanten des Impedanzanpassungsschaltkreises (204) auf der Basis des getrennten Steuerungssignals, wobei
die Überlagerung das Ausgeben des Hochfrequenzsignals für eine vorgegebene Zeit stoppt und eine digitale Version des Steuerungssignals innerhalb der Stoppzeit ausgibt,
das Trennen das Hochfrequenzsignal und das Steuerungssignal unter Verwendung eines Filterschaltkreises trennt, und
die Steuerung das Halten des getrennten Steuerungssignals und Steuerung der Schaltkreiskonstanten des Anpassungsschaltkreises (204) auf der Basis des gehaltenen Steuerungssignals einschließt.

## Revendications

1. Lecteur d'étiquette RFID comportant :
un module d'antenne (200) comportant une antenne (202) à des fins de communication avec une étiquette RFID (11) ;
un module de commande (100) comportant un circuit à haute fréquence (110, 120) adapté pour traiter un signal à haute fréquence à des fins de communication avec l'étiquette RFID (11) ; et
une ligne de signal (300) qui connecte l'antenne (202) et le circuit à haute fréquence (110, 120) ;
un moyen de superposition (130) se trouvant dans le module de commande (100) adapté pour superposer un signal de commande à des fins d'ajustement d'impédance sur le signal à haute fréquence émis en provenance du circuit à haute fréquence (110, 120) jusqu'à l'antenne (202) pour émettre un signal superposé ;
un moyen de séparation (203) se trouvant dans le module d'antenne (200) adapté pour séparer le signal superposé entré en provenance du moyen de superposition (130) par le biais de la ligne de signal (300) pour obtenir le signal à haute fréquence et le signal de commande ;
un circuit d'adaptation (204) adapté pour soumettre le signal à haute fréquence séparé par le moyen de séparation (203) à une adaptation d'impédance et adapté pour entrer le signal à haute fréquence jusque dans l'antenne (202) ; et
un moyen d'ajustement (205) adapté pour commander une constante de circuit du circuit d'adaptation (204) en fonction du signal de commande séparé par le moyen de séparation (203), dans lequel
le moyen de superposition (130) est adapté pour superposer un signal CC d'une valeur de tension correspondant au signal de commande sur le signal à haute fréquence, et
le moyen de séparation (203) est adapté pour séparer le signal à haute fréquence et le signal de commande en se servant d'un circuit de filtrage.

2. Lecteur d'étiquette RFID comportant :
un module d'antenne (200) comportant une antenne (202) à des fins de communication avec une étiquette RFID (11) ;
un module de commande (100) comportant un circuit à haute fréquence (110, 120) adapté pour traiter un signal à haute fréquence à des fins de communication avec l'étiquette RFID (11) ; et
une ligne de signal (300) qui connecte l'antenne (202) et le circuit à haute fréquence (110, 120) ;
un moyen de superposition (173) se trouvant dans le module de commande (100) adapté pour superposer un signal de commande à des fins d'ajustement d'impédance sur le signal à haute fréquence émis en provenance du circuit à haute fréquence (110, 120) jusqu'à l'antenne (202) pour émettre un signal superposé ;
un moyen de séparation (203, 221, 222) se trouvant dans le module d'antenne (200) adapté pour séparer le signal superposé entré en provenance du moyen de superposition (173) par le biais de la ligne de signal (300) pour obtenir le signal à haute fréquence et le signal de commande ;
un circuit d'adaptation (204) adapté pour soumettre le signal à haute fréquence séparé par le moyen de séparation (203, 221, 222) à une adaptation d'impédance et adapté pour entrer le signal à haute fréquence jusque dans l'antenne (202) ; et
un moyen d'ajustement (230) adapté pour commander une constante de circuit du circuit d'adaptation (204) en fonction du signal de commande séparé par le moyen de séparation (203, 221, 222), dans lequel
le moyen de superposition (173) est adapté pour arrêter la sortie du signal à haute fréquence pendant une durée prédéterminée et adapté pour émettre une version numérique du signal de commande dans les limites du temps d'arrêt,
le moyen de séparation (203, 221, 222) est adapté pour séparer le signal à haute fréquence et le signal de commande en se servant d'un circuit de filtrage, et
le moyen d'ajustement (230) comprend un moyen de retenue (232) adapté pour retenir le signal de commande séparé par le moyen de séparation (203, 221, 222) et commande la constante de circuit du circuit d'adaptation (204) en fonction du signal de commande retenu par le moyen de retenue (232).

3. Lecteur d'étiquette RFID selon la revendication 2, dans lequel
le moyen de superposition (131) est adapté pour appliquer une polarisation CC sur le signal superposé, et
le moyen de séparation (203) est adapté pour séparer un courant de polarisation en provenance du signal superposé et est adapté pour fournir le courant de polarisation au moyen de retenue (232) sous la forme d'une alimentation électrique.

4. Lecteur d'étiquette RFID selon l'une quelconque des revendications 1 à 3, comportant par ailleurs :
un moyen de détection (150) pour détecter un rapport d'onde stationnaire dans la ligne de signal (300) ; et
un moyen de commande (170) adapté pour émettre le signal de commande en fonction du rapport d'onde stationnaire détecté par le moyen de détection (150).

5. Lecteur d'étiquette RFID selon l'une quelconque des revendications 1 à 3, comportant par ailleurs :
un moyen de détection (150) adapté pour détecter une étiquette RFID prédéterminée à des fins d'étalonnage ; et
un moyen de commande (102) adapté pour émettre le signal de commande en fonction d'un état de détection de l'étiquette RFID à des fins d'étalonnage par le moyen de détection (150).

6. Procédé d'étalonnage d'un lecteur d'étiquette RFID comprenant une antenne (202) à des fins de communication avec une étiquette RFID (11), un circuit à haute fréquence (110, 120) qui traite un signal à haute fréquence à des fins de communication avec l'étiquette RFID (11), une ligne de signal (300) qui connecte l'antenne (202) et le circuit à haute fréquence (110, 120), et un circuit d'adaptation d'impédance (204) qui soumet l'antenne (202) et la ligne de signal (300) à une adaptation d'impédance, le procédé comportant :
superposer un signal de commande à des fins d'ajustement d'impédance sur un signal à haute fréquence émis en provenance du circuit à haute fréquence (110, 120) jusqu'à l'antenne (202) et transmettre un signal superposé à la ligne de signal (300) ;
séparer le signal superposé transmis sur la ligne de signal (300) pour obtenir le signal à haute fréquence et le signal de commande ; et
commander une constante de circuit du circuit d'adaptation d'impédance (204) en fonction du signal de commande séparé, dans lequel
la superposition superpose un signal CC d'une valeur de tension correspondant au signal de commande sur le signal à haute fréquence, et
la séparation sépare le signal à haute fréquence et le signal de commande en se servant d'un circuit de filtrage.

7. Procédé d'étalonnage d'un lecteur d'étiquette RFID comprenant une antenne (202) à des fins de communication avec une étiquette RFID (11), un circuit à haute fréquence (110, 120) qui traite un signal à haute fréquence à des fins de communication avec l'étiquette RFID (11), une ligne de signal (300) qui connecte l'antenne (202) et le circuit à haute fréquence (110, 120), et un circuit d'adaptation d'impédance (204) qui soumet l'antenne (202) et la ligne de signal (300) à une adaptation d'impédance, le procédé comportant :
superposer un signal de commande à des fins d'ajustement d'impédance sur un signal à haute fréquence émis en provenance du circuit à haute fréquence (110, 120) jusqu'à l'antenne (202) et transmettre un signal superposé à la ligne de signal (300) ;
séparer le signal superposé transmis sur la ligne de signal (300) pour obtenir le signal à haute fréquence et le signal de commande ; et
commander une constante de circuit du circuit d'adaptation d'impédance (204) en fonction du signal de commande séparé, dans lequel
la superposition arrête la sortie du signal à haute fréquence pendant une durée prédéterminée et émet une version numérique du signal de commande dans les limites du temps d'arrêt,
la séparation sépare le signal à haute fréquence et le signal de commande en se servant d'un circuit de filtrage, et
la commande comprend la retenue du signal de commande séparé et la commande de la constante de circuit du circuit d'adaptation (204) en fonction du signal de commande retenu.
